(19)

Europäisches
Patentamt
European
Patent Office
Office européen
des brevets

(11) **EP 1 940 175 A1**

(12) **EUROPEAN PATENT APPLICATION**

(43) Date of publication:
 **02.07.2008 Bulletin 2008/27**

(51) Int Cl.:
 **H04N 7/26** (2006.01)    **H04N 7/50** (2006.01)

(21) Application number: **07118468.3**

(22) Date of filing: **15.10.2007**

(84) Designated Contracting States:
 **AT BE BG CH CY CZ DE DK EE ES FI FR GB GR
 HU IE IS IT LI LT LU LV MC MT NL PL PT RO SE
 SI SK TR**
 Designated Extension States:
 **AL BA HR MK RS**

(30) Priority: **13.10.2006 KR 20060099870**

(71) Applicant: **Samsung Electronics Co., Ltd.**
 **Suwon-si, Gyeonggi-Do (KR)**

(72) Inventors:
 • **Kim, Bong-Gon**
  **Gyeonggi-do (KR)**
 • **Kim, Chan-Yul**
  **Gyeonggi-do (KR)**
 • **Joo, Young-Hun**
  **Gyeonggi-do (KR)**

(74) Representative: **Grünecker, Kinkeldey,**
 **Stockmair & Schwanhäusser**
 **Anwaltssozietät**
 **Leopoldstrasse 4**
 **80802 München (DE)**

(54) **Image encoding apparatus and memory access method**

(57)    Disclosed is an image encoding apparatus and a memory access method. The image encoding apparatus for encoding image data includes: a memory for storing a frame of the image data; a motion prediction unit for detecting a motion vector of a predetermined block unit for a currently-input image frame based on the stored frame, and accessing the memory in order to perform sub-pixel interpolation for a corresponding block of the motion vector; and a motion compensation unit for performing motion compensation with respect to a frame block to be compressed, by using the detected motion vector, thereby reducing the number of times the memory is accessed for encoding. Since the number of memory access times is reduced, which is very frequently used in interpolation of a color difference signal, low-power encoding is achieved.

FIG.3

EP 1 940 175 A1

**Description**

The present invention relates to an image encoding apparatus and a memory access method which can reduce the number of times a memory is accessed for encoding, and thus can realize low-power encoding in the interpolation of color difference signals.

As generally known in the art, image compression is based on a number of compression standards, including MPEG and H.26x, and such image compression techniques are widely used for video players, VODs, video telephones, DMB, etc. In addition, development of wireless communication (e.g. 2.5G/3G) has resulted in commercialized image transmission on a wireless mobile basis.

Most moving image compression standards, including MPEG- or H.26x-series moving image codecs, adopt a compression scheme based on motion estimation/compensation and transformation. In the case of encoding based on such motion estimation/compensation, information regarding the motion vector of each block must be encoded and transmitted. In addition, how the motion vector is encoded may greatly affect the compression efficiency.

Images are generally encoded in the following manner: a digital image signal is subjected to DCT (Discrete Cosine Transform); a DCT coefficient is quantized so as to perform VLC (Variable Length Coding); the quantized DCT coefficient is inversely quantized and subjected to inverse DCT so that the image is restored and stored in a memory; the stored image and the next frame image are used to obtain a motion vector; and the motion vector is subjected to VLC so as to constitute a bit stream together with the encoded image information and transmit it. Decoding of images follows the inverse order of these steps.

Methods for compressing and encoding images are based on spatial redundancy and/or temporal redundancy. In the case of a moving image codec based on temporal redundancy, the temporal redundancy with regard to the previous frame can be efficiently eliminated by using the motion vector of macro blocks. For example, the codec searches for a macro block most similar to the macro block of the current frame from a previous frame (i.e., reference frame).

As a standard for determining similarity between the macro block of the current frame and that of the previous frame, the codec calculates the square of distance between two vectors and searches for a macro block having the smallest square. In this manner, the redundancy between frames is efficiently eliminated so as to improve the compression efficiency. With the development of the image (and audio) compression encoding method and the hardware/software infrastructure according to the method, terrestrial/satellite DMBs, as well as a video telephone system capable of providing communication with an image, have been developed. H.264 is a high-efficiency compression technology and is based on a unit of network abstraction layer (NAL). Types of NALs including video data may be largely classified into an instantaneous decoding refresh (IDR) NAL and a non-IDR NAL.

The IDR NAL is a random accessible point, in which the temporal redundancy is not used but only the spatial redundancy is used for compression, and frames input before an IDR NAL are all removed in a frame buffer so as not to be used as a reference for compression any more. Unlike the IDR NAL, the non-IDR NAL includes an I-type slice, a P-type slice and a B-type slice.

The P-type slice and B-type slice are in a state compressed by the same predictive encoding as that of the existing codec. The I-type slice is in a state compressed by using only the spatial redundancy as in the basic IDR, but there is a difference in that contents in a frame buffer are not removed in the case of the I-type slice. The reason why contents in the frame buffer are not removed is that a P-type NAL or B-type NAL following an I-type slice may refer to contents before the I-type slice.

While an IDR frame having an IDR NAL can serve as a random accessible point used in a variable-speed reproduction (FF/REW) mode for a moving image reproduction, a non-IDR frame having a non-IDR NAL is not utilized as a random accessible point even though the non-IDR frame is an I frame using only a spatial redundancy. This is because, as described above, it is probable that NALs following an I frame are subjected to predictive encoding based on contents before the I frame.

The motion compensation method according to such an H.264-based moving image compression standard supports various block sizes of $16\times16$ to $4\times4$, unlike other standards. One macro block may be divided into sub-blocks of $16\times16$, $16\times8$, $8\times16$, $8\times8$, $8\times4$, $4\times8$ and $4\times4$ in terms of luminance components (Y), and may be divided into sub-blocks of $8\times8$, $8\times4$, $4\times8$, $4\times4$, $4\times2$, $2\times4$ and $2\times2$ in terms of chromaticity components (Cb and Cr), which are half the size of the luminance components, respectively.

With respect to the sub-blocks having various sizes, a motion prediction of an integer pixel accuracy is performed, and then a motion prediction of a sub-pixel accuracy is performed to improve the performance. In this case, generally, the sub-pixels of the luminance blocks are interpolated by using a filter, and the sub-pixels of the chromaticity blocks are interpolated by using adjacent integer pixels. In order to perform sub-pixel interpolation with respect to sub-blocks having various sizes, a reference block is required for each size, in which reference blocks having the sizes of $21\times21$ to $9\times9$ are required in the case of the luminance blocks, and reference blocks having the sizes of $9\times9$ to $3\times3$ are required in the case of the chromaticity blocks, so that it takes a long time to read such reference blocks. That is, since the reference blocks for motion compensation also have various sizes in accordance with sub-blocks having various sizes, it takes a considerably long time to access a memory and to retrieve therefrom the reference blocks for motion compensation.

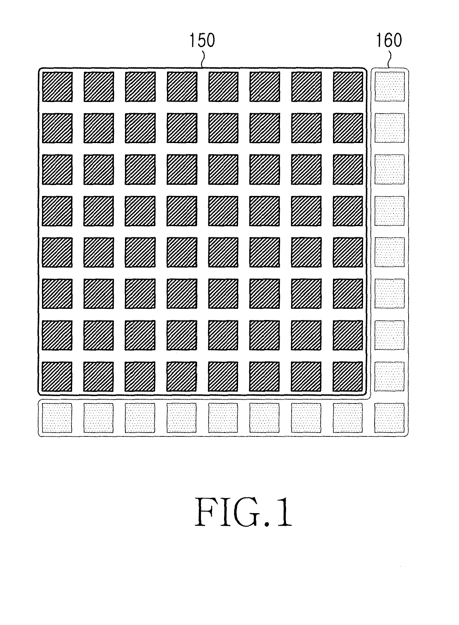

For example, as shown in FIG. 1, when a 16×16 macro block is used for motion prediction and a 4:2:0 format is used, a block for a chromaticity signal is an 8×8 block 150. FIG. 1 shows a part of the pixels included in a predetermined motion prediction block. In FIG. 1, hatched squares represent an 8×8 block 150, and dotted squares represent integer pixels 160 used for sub-pixel interpolation.

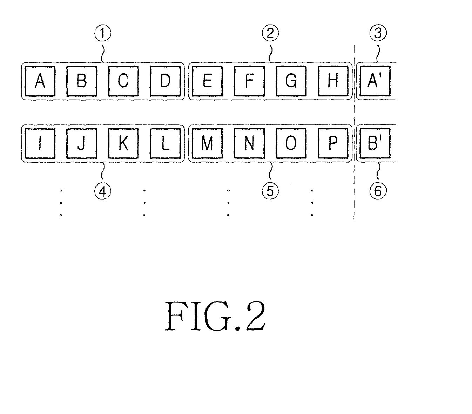

FIG. 2 is a view illustrating a memory access method for sub-pixel interpolation in a conventional video encoding apparatus.

In order to perform sub-pixel interpolation for the 8×8 block 150, integer pixels 160 adjacent to the corresponding block are required. FIG. 2 shows an example of accessing integer pixels in a memory. In FIG. 2, A' and B' represent integer pixels of a neighbor block.

Generally, a memory access is performed four pixels by four pixels. Referring to FIG. 2, A, B, C and D "①" and I, J, K and L "④" are loaded and sub-pixels in each pixel are interpolated. Next, E, F, G and H "②" and M, N, O and P "⑤" are loaded and sub-pixels in each pixel are interpolated, and then A' ③ and B' ⑥ are loaded. As described above, when sub-pixel interpolation for an 8×8 block 150 is performed, nine integer pixels per line are loaded. In the case of a conventional motion compensation apparatus, loading nine integer pixels requires at least three times as much memory access.

Thus, when the size of a block is determined to be "16×16" in the conventional motion prediction apparatus, a block for a chromaticity signal is determined to be an 8×8 block 150. In this case, as shown in FIG. 2, the memory access for obtaining integer pixels for sub-pixel interpolation must be performed three times per line. Consequently, a total of 27 times more memory accesses is required to access the entire block 150. The number of memory access times required per block 150 is as follows:

> 8×8 block: three times access per line × 9 lines = 27;
> 8×4 block: three times access per line × 5 lines = 15;
> 4×8 block: two times access per line × 9 lines = 18; and
> 4×4 block: two times access per line × 5 lines = 10.

Since such sub-pixel interpolation is used as an inter mode between all screens, and most frames are encoded in the inter mode, the sub-pixel interpolation is very widely used.

According to the method of reading a reference block, reference blocks are stored in a memory in advance, and then a reference block according to the reference index and motion vector of each block is read. In the case of H. 264, there may be a plurality of reference images. Particularly, an apparatus, such as a mobile phone, a PDA, etc., based on portability and mobility, stores reference images not in a high-speed internal memory but in a low-speed external memory due to a limitation in the size of the internal memory. The apparatus then accesses the external memory and reads a corresponding reference image whenever a motion is compensated, so that it takes a long time to read a reference block.

It is the object of the present invention to provide an image encoding apparatus and a memory access method for interpolating a color difference signal in encoding.

This object is solved by the subject matter of the independent claims.

Preferred embodiments are defined in the dependent claims.

In addition, in accordance with an aspect of the present invention, there is provided a method for reducing the number of times memory access is required for sub-pixel interpolation.

In accordance with one aspect of the present invention, there is provided an image encoding apparatus for encoding image data, the apparatus comprising:

> a memory for storing a frame of the image data;
> a motion prediction unit for: detecting a motion vector of a predetermined block unit for a currently-input image frame based on the stored frame, and accessing the memory in order to perform sub-pixel interpolation for a corresponding block of the motion vector; and
> a motion compensation unit for performing motion compensation with respect to a frame block to be compressed, by using the detected motion vector.

The above and other features and advantages of the present invention will be more apparent from the following detailed description taken in conjunction with the accompanying drawings, in which:

> FIG. 1 shows a view illustrating conventional motion compensation blocks;
> FIG. 2 is a view illustrating a memory access method for sub-pixel interpolation in a conventional video encoding apparatus;
FIG. 3 is a block diagram illustrating the configuration of an image encoding apparatus according to an embodiment of the present invention;
FIG. 4 is a flowchart illustrating a memory access method in an image encoding apparatus according to an embodiment of the present invention; and
FIGs. 5A and 5B are views illustrating a memory access method for sub-pixel interpolation in the image encoding apparatus according to an embodiment of the present invention.

Hereinafter, an example embodiment of the present invention is described with reference to the accompanying drawings. For the purposes of clarity and simplicity, a detailed description of known functions and configurations incorporated herein is omitted when it may obscure the subject matter of the present invention.

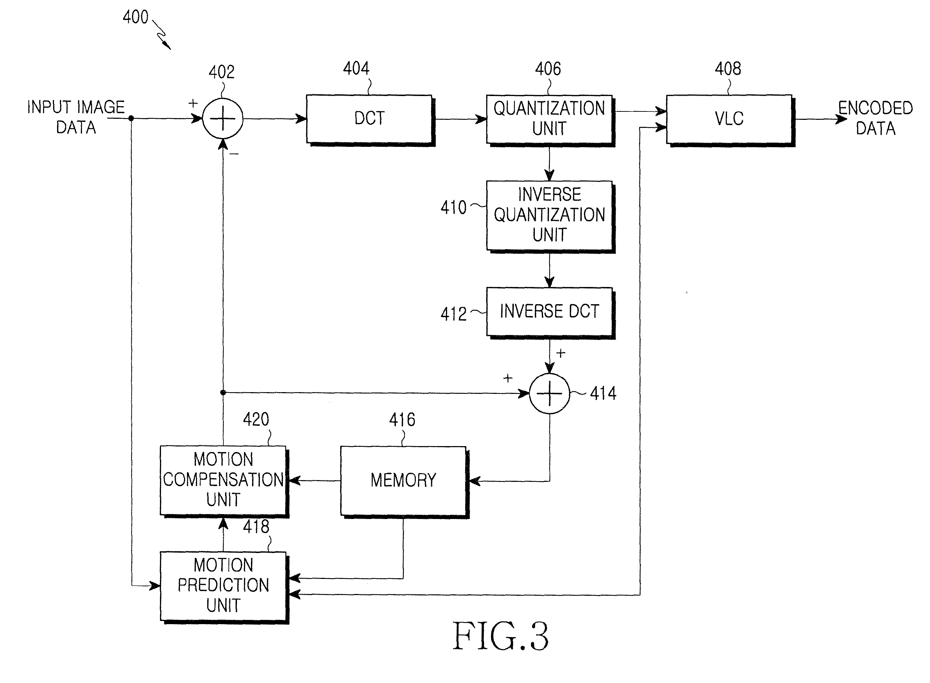

FIG. 3 is a block diagram illustrating the configuration of an image encoding apparatus according to an embodiment of the present invention.

The image encoding apparatus 400 according to the embodiment of the present invention performs an intra-frame compression and an inter-frame compression, for example, according to a compression sequence of I, P and B frames.

Generally, pixel data of an I frame is not influenced by a subtraction unit 402 and is output to a discrete cosine transform (DCT) operation unit 404. The DCT operation unit 404 performs a DCT operation on a 4×4 pixel block by a 4×4 pixel block (or, an 8×8 pixel block by an 8×8 pixel block in the case of a high profile). A quantization unit 406 quantizes the DCT data. A variable-length coding (VLC) unit 408 performs a statistical encoding operation on the quantized data through variable-length coding, and multiplexes the statistically encoded image data, a motion vector applied from a motion prediction unit 418, and additional information such as a macro block type, and then outputs the multiplexed data.

A compressed I frame output from the quantization unit 406 is inverse-quantized by an inverse quantization unit 410, is decompressed through an inverse DCT operation by an inverse DCT operation unit 412, and then is applied to an addition unit 414. The decompressed I frame is not influenced by the addition unit 414, and is transferred to a memory unit 416, which serves as a buffer, as is. Then, the decompressed I frame is stored in the memory unit 416 for use in the predictive compression of P and B frames. The predictive encoding of P and B frames is performed in a similar manner as that of the predictive compression. Image frames stored in the memory unit 416 are provided to the motion prediction unit 418.

The motion prediction unit 418 detects a motion vector by using a currently-input image frame and a reference frame stored in the memory unit 416, and outputs the motion vector to the VLC unit 408 and a motion correction unit 420.

The motion correction unit 420 reads a block corresponding to the motion vector predicted by the motion prediction unit 418 from the memory unit 416, and provides the read block to the subtraction unit 402. The subtraction unit 402 subtracts the predicted block, which has been obtained from the memory unit 416 through the motion correction unit 420, from a block corresponding to a frame to be currently compressed, in which the subtraction operation is performed in a relation of pixel to pixel.

A difference or residue obtained through the subtraction by the subtraction unit 402 is applied to the DCT operation unit 404. Meanwhile, a compressed P frame is decoded by the inverse quantization unit 410 and inverse DCT operation unit 412, and the decoded data are applied to a first input terminal of the addition unit 414. Simultaneously, each block of the reference image frame stored in the memory unit 416 is accessed for prediction of a current frame, and an accessed block is applied through the motion correction unit 420 to a second input terminal of the addition unit 414.

The addition unit 414 adds an encoded difference or residue output to data output from the motion correction unit 420, thereby restoring an original image. A P frame restored by the addition unit 414 is stored in the memory unit 416 for use in predictive encoding/decoding of P and B frames in the future.

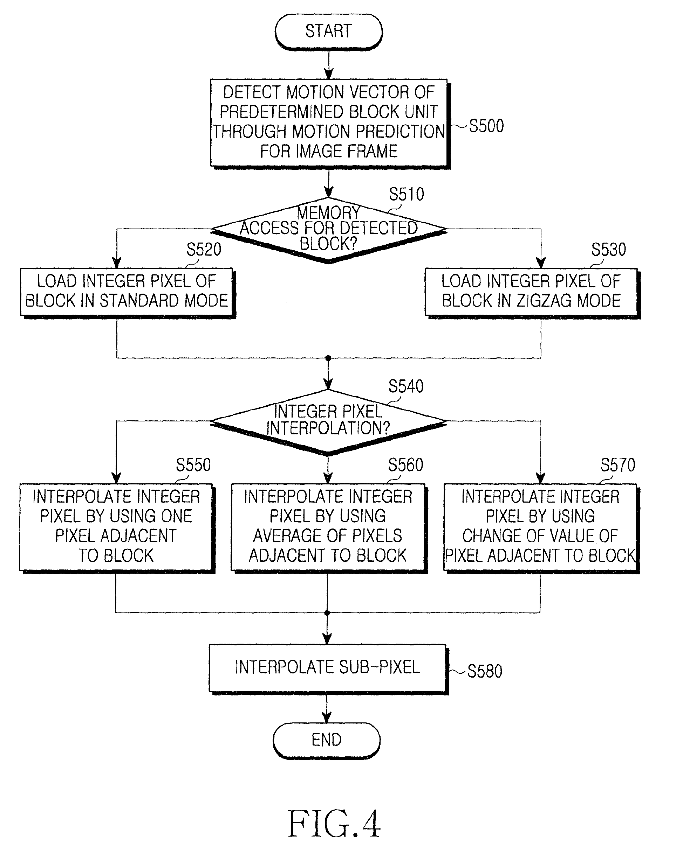

FIG. 4 is a flowchart illustrating a memory access method in an image encoding apparatus according to an embodiment of the present invention.

The motion prediction unit 418 divides a currently input image frame into macro blocks, finds a reference frame most similar to the currently input image by comparing the currently input image frame with reference frames stored in the memory, and detects a motion vector (MV) of a predetermined block unit 150 for an image frame to be currently encoded (step 500). In this case, the motion prediction may be performed in the same manner as in the MPEG-2 or MPEG-4, in the block unit 150. Accordingly, the motion vector of the block unit 150 is obtained.

Also, in order to perform sub-pixel interpolation, the motion prediction unit 418 loads an integer pixel of the corresponding block 150 of the motion vector and accesses the memory unit 416 (step 510).

Then, the motion correction unit 420 performs a motion correction operation with respect to a block to be compressed, by using the motion vector detected in the block unit 150.

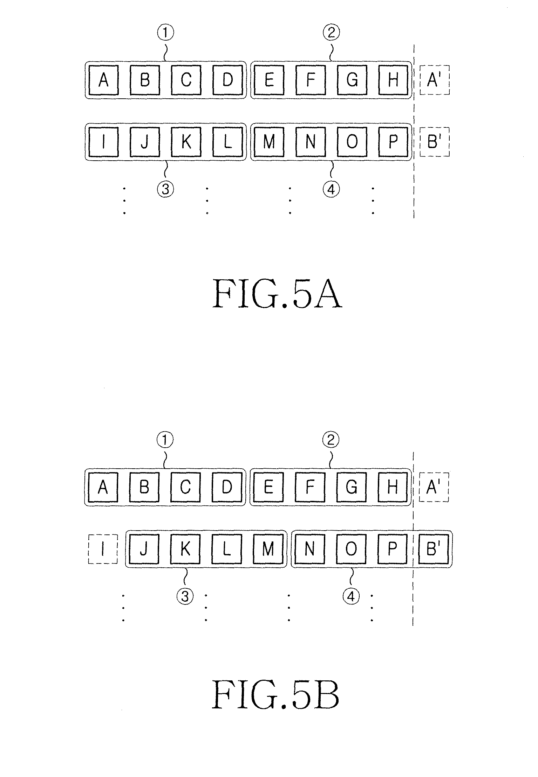

FIGs. 5A and 5B are views illustrating a memory access method for sub-pixel interpolation in the image encoding apparatus according to an embodiment of the present invention.

First, the motion prediction unit 418, which generally loads pixels in a unit of four pixels, loads pixels A, B, C and D "①" and pixels I, J, K and L "③", loads pixels E, F, G and H "②" and pixels M, N, O and P "④" in a normal mode, and interpolates sub-pixels in each pixel (step 520). Herein, A' and B' represent integer pixels of a neighbor block. In this case, since pixels A' and B' have not been loaded, it is impossible to interpolate sub-pixels between pixels H, A', P and B'. Therefore, the motion prediction unit 418 first interpolates the neighbor pixels A' and B', and then performs the sub-pixel interpolation.

Also, as shown in FIG. 5B, the motion prediction unit 418 loads pixels A, B, C and D "①" and pixels J, K, L and M "③", loads pixels E, F, G and H "②" and pixels N, O, P and B' "④" in a zigzag mode, and interpolates sub-pixels in each pixel (step 530). In this case, since pixels I and A' have not been accessed, it is impossible to interpolate sub-pixels between pixels A, B, I and J and sub-pixels between pixels H, A', P and B'. Therefore, the motion prediction unit 418 first interpolates pixels A' and I by means of neighbor pixels, and then performs the sub-pixel interpolation.

Meanwhile, in accessing the memory unit 416, it is necessary to interpolate two integer pixels in the normal mode and zigzag mode. Such an integer pixel interpolation is performed by any one of the following schemes.

**<Scheme 1>**

The integer pixels are replaced by neighbor pixels, in which a neighbor pixel is used for the integer pixel interpolation based on Equation 1 (step 540).

$$\text{Equation 1}$$
$$\text{- normal mode}: A' = H \text{ or } A' = P,$$
$$B' = H \text{ or } B' = P$$
$$\text{- zigzag mode}: A' = H \text{ or } A' = P \text{ or } A' = B',$$
$$I = A \text{ or } I = B \text{ or } I = J$$

**<Scheme 2>**

The average of neighbor pixels is used based on Equation 2 (step 550).

$$\text{Equation 2}$$
$$\text{- normal mode}: A' = B' = (H + P + 1) >> 1$$
$$\text{- zigzag mode}: A' = (G + H + P + B' + 2) >> 2$$
$$I = (A + B + J + K + 2) >> 2$$

**<Scheme 3>**

A gradient of a neighbor pixel is used, that is, a change in the value of a neighbor pixel based on Equation 3 (step 560).

$$\text{Equation 3}$$
$$\text{- normal mode}: A' = H + (H - G)$$
$$B' = P + (P - O)$$
$$\text{- zigzag mode}: A' = H + (H - G)$$
$$I = J + (J - K)$$

Integer pixels interpolated in such a manner are used to perform sub-pixel interpolation. Even when any one of 8×4, 4×8 and 4×4 blocks is selected, the aforementioned schemes can be applied. Thereafter, in the case of an 8×8 and 8×4 block, nine integer pixels per line are required for sub-pixel interpolation. Since 32 bits of data can be accessed at one time, it is possible to access four integer pixels at one time. Therefore, as shown in FIG. 4, at least three memory accesses per line are required. Similarly, in the case of a 4×8 and 4×4 block, five integer pixels per line are required, so that at least two times the memory accesses per line is required. The number of memory access times required per block is as follows:

8×8 block: two accesses per line × 9 lines = 18;
8×4 block: two accesses per line × 5 lines =10;
4×8 block: one access per line × 9 lines = 9; and
4×4 block: one access per line × 5 lines = 5.

Consequently, the number of memory access times is reduced to 76% in the case of the 8×8 and 8×4 block, and to 50% in the case of the 4×8 and 4×4 block. Generally, the number of memory access times is very important in a video encoding apparatus. A memory access uses a cycle which is several to dozens times as long as that of a general command. In addition, since interpolation of a color difference signal is widely used in encoding, the color difference signal interpolation considering memory access is very efficient in achieving low-power encoding.

As described above, according to the present invention, the number of memory access times required for encoding can be reduced, so that it is possible to efficiently achieve low-power encoding because interpolation of a color difference signal is widely used in encoding.

While the image encoding apparatus and memory access method the present invention has been shown and described with reference to certain example embodiments thereof, it will be understood by those skilled in the art that various changes in form and details may be made therein without departing from the scope of the invention as defined by the appended claims. Accordingly, the scope of the invention is not to be limited by the above embodiments but by the claims.

**Claims**

1.    An image encoding apparatus for encoding image data, the apparatus comprising:

a memory for storing a frame of the image data;
a motion prediction unit for detecting a motion vector of a predetermined block unit for a currently-input image frame based on the stored frame, and accessing the memory in order to perform sub-pixel interpolation for a corresponding block of the motion vector; and
a motion compensation unit for performing motion compensation with respect to a frame block to be compressed, by using the detected motion vector.

2.    The apparatus as claimed in claim 1, wherein the motion prediction unit is adapted to access an integer pixel of the corresponding block in a standard mode and performs the sub-pixel interpolation.

3.    The apparatus as claimed in claim 1, wherein the motion prediction unit is adapted to access an integer pixel of the corresponding block in a zigzag mode and performs the sub-pixel interpolation.

4.    The apparatus as claimed in claim 2 or 3, wherein the motion prediction unit is adapted to interpolate the integer pixel by using one of the items selected from the group consisting of one pixel adjacent to the corresponding block, an average of pixels adjacent to the corresponding block, and a change in a value of a pixel adjacent to the corresponding block.

5.    A memory access method for encoding image data, the method comprising the steps of:

storing a frame for the image data;
detecting a motion vector of a predetermined block unit for a currently-input image frame based on the stored frame; and
accessing a memory in order to perform sub-pixel interpolation for a corresponding block of the motion vector.

6.    The method as claimed in claim 5, wherein, in the step of accessing the memory, the sub-pixel interpolation is performed through access to an integer pixel of the block in a standard mode.

7. The method as claimed in claim 5, wherein, in the step of accessing the memory, the sub-pixel interpolation is performed through access to an integer pixel of the block in a zigzag mode.

8. The method as claimed in claim 6 or 7, wherein the integer pixel is interpolated by one pixel adjacent to the block.

9. The method as claimed in claim 6 or 7, wherein the integer pixel is interpolated by using an average of pixels adjacent to the block.

10. The method as claimed in claim 6 or 7, wherein the integer pixel is interpolated by using a change in a value of a pixel adjacent to the block.

11. The method as claimed in one of claims 5 to 10, further comprising a step of performing motion compensation with respect to a frame block to be compressed, by using the detected motion vector.

150    160

FIG.1

①　②　③

| A | B | C | D | E | F | G | H | A' |

④　⑤

| I | J | K | L | M | N | O | P | B' |

# FIG.2

FIG.3

EP 1 940 175 A1

START

DETECT MOTION VECTOR OF
PREDETERMINED BLOCK UNIT
THROUGH MOTION PREDICTION
FOR IMAGE FRAME — S500

S510
MEMORY
ACCESS FOR DETECTED
BLOCK?

S520
LOAD INTEGER PIXEL OF
BLOCK IN STANDARD MODE

S530
LOAD INTEGER PIXEL OF
BLOCK IN ZIGZAG MODE

S540
INTEGER PIXEL
INTERPOLATION?

S550
INTERPOLATE INTEGER
PIXEL BY USING ONE
PIXEL ADJACENT
TO BLOCK

S560
INTERPOLATE INTEGER
PIXEL BY USING
AVERAGE OF PIXELS
ADJACENT TO BLOCK

S570
INTERPOLATE INTEGER
PIXEL BY USING
CHANGE OF VALUE OF
PIXEL ADJACENT TO BLOCK

INTERPOLATE SUB-PIXEL — S580

END

FIG.4

① ②

A B C D  E F G H  A'

I J K L  M N O P  B'

③ ④

# FIG.5A

① ②

A B C D  E F G H  A'

I  J K L M  N O P  B'

③ ④

# FIG.5B

| European Patent Office | EUROPEAN SEARCH REPORT | Application Number EP 07 11 8468 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 418 763 A (MITSUBISHI ELECTRIC CORP [JP]) 12 May 2004 (2004-05-12) * abstract; figures 1,3,5 * * paragraphs [0003] - [0007], [0033], [0052] - [0058], [0080] - [0084] * | 1-11 | INV. H04N7/26 H04N7/50 |
| A | EP 1 469 682 A (HITACHI LTD [JP]) 20 October 2004 (2004-10-20) * abstract; figures 18,25 * * paragraphs [0012], [0042], [0074], [0084] - [0101] * | 1-11 | |
| A | MO LI ET AL: "The high throughput and low memory access design of sub-pixel interpolation for H.264/AVC HDTV decoder" SIGNAL PROCESSING SYSTEMS DESIGN AND IMPLEMENTATION, 2005. IEEE WORKSH OP ON ATHENS, GREECE NOVEMBER 2 - 4, 2005, PISCATAWAY, NJ, USA,IEEE, 2 November 2005 (2005-11-02), pages 296-301, XP010882585 ISBN: 978-0-7803-9333-2 * abstract * * paragraphs [0001], [02.B], [0003], [0004] * | 1-11 | |

TECHNICAL FIELDS SEARCHED (IPC)

H04N

-/--

The present search report has been drawn up for all claims

| Place of search | Date of completion of the search | Examiner |
|---|---|---|
| Munich | 21 May 2008 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## EUROPEAN SEARCH REPORT

Application Number

EP 07 11 8468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SATO K ET AL: "Adaptive mc interpolation for memory access reduction in JVT video coding" SIGNAL PROCESSING AND ITS APPLICATIONS, 2003. PROCEEDINGS. SEVENTH INT ERNATIONAL SYMPOSIUM ON JULY 1-4, 2003, PISCATAWAY, NJ, USA,IEEE, vol. 1, 1 July 2003 (2003-07-01), pages 77-80, XP010653133 ISBN: 978-0-7803-7946-6 * abstract * * paragraphs [0002], [0003], [04.1], [0006] * | 1-11 | |
| A | DIAS T ET AL: "Efficient motion vector refinement architecture for sub-pixel motion estimation systems" SIGNAL PROCESSING SYSTEMS DESIGN AND IMPLEMENTATION, 2005. IEEE WORKSH OP ON ATHENS, GREECE NOVEMBER 2 - 4, 2005, PISCATAWAY, NJ, USA,IEEE, 2 November 2005 (2005-11-02), pages 313-318, XP010882588 ISBN: 978-0-7803-9333-2 * abstract * * paragraphs [0001], [04.A] * | 1-11 | TECHNICAL FIELDS SEARCHED (IPC) |
| A | "Real-Time Software Implementation of H.264 Baseline Profile Video Encoder for Mobile and Handheld Devices" ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, 1 January 2006 (2006-01-01), pages V-V, XP031101544 ISBN: 978-1-4244-0469-8 * paragraphs [2.B.2], [02.C] * | 1-11 | |

-/--

The present search report has been drawn up for all claims

| Place of search | Date of completion of the search | Examiner |
|---|---|---|
| Munich | 21 May 2008 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

| | **European Patent Office** | **EUROPEAN SEARCH REPORT** | Application Number |
|---|---|---|---|
| | | | EP 07 11 8468 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHUAN-YUNG TSAI ET AL: "Bandwidth optimized motion compensation hardware design for H.264/AVC HDTV decoder" CIRCUITS AND SYSTEMS, 2005. 48TH MIDWEST SYMPOSIUM ON CINICINNATI, OHIO AUGUST 7-10, 2005, PISCATAWAY, NJ, USA,IEEE, 7 August 2005 (2005-08-07), pages 1199-1202, XP010895358 ISBN: 978-0-7803-9197-0 * abstract * * paragraphs [0001] - [0003] * ----- | 1-11 | |
| | | | TECHNICAL FIELDS SEARCHED (IPC) |

The present search report has been drawn up for all claims

| Place of search | Date of completion of the search | Examiner |
|---|---|---|
| Munich | 21 May 2008 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 8468

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2008

| Patent document cited in search report | | Publication date | Patent family member(s) | | Publication date |
|---|---|---|---|---|---|
| EP 1418763 | A | 12-05-2004 | CA | 2459229 A1 | 22-01-2004 |
| | | | CN | 1557099 A | 22-12-2004 |
| | | | CN | 1819659 A | 16-08-2006 |
| | | | CN | 1882094 A | 20-12-2006 |
| | | | CN | 1905679 A | 31-01-2007 |
| | | | WO | 2004008772 A1 | 22-01-2004 |
| | | | JP | 2004048552 A | 12-02-2004 |
| | | | US | 2004233990 A1 | 25-11-2004 |
| | | | US | 2008056371 A1 | 06-03-2008 |
| EP 1469682 | A | 20-10-2004 | CN | 1550110 A | 24-11-2004 |
| | | | WO | 03063503 A1 | 31-07-2003 |
| | | | KR | 20070108571 A | 12-11-2007 |

EPO FORM P0459

For more details about this annex : see Official Journal of the European Patent Office, No. 12/82